# EUROPEAN PATENT SPECIFICATION

(11) **EP 1 338 837 B1**
(45) Date of publication and mention of the grant of the patent: **28.09.2005**
(21) Application number: 03003164.5
(22) Date of filing: 18.02.2003
(51) Int. Cl.: F16K 31/42

(54) **Four-way switching valve**
Vierweg- Schaltventil
Soupape de commutation à quatre voies

(30) Priority: 21.02.2002 JP 2002044183
(43) Date of publication of application: 27.08.2003
(73) Proprietor: TGK CO., Ltd., Tokyo 193-0942 (JP)
(72) Inventor: Hirota, Hisatoshi, Hachioji-shi, Tokyo 193-0942 (JP); Tsugawa, Tokumi, Hachioji-shi, Tokyo 193-0942 (JP); Koyama, Katsumi, Hachioji-shi, Tokyo 193-0942 (JP)
(74) Representative: Grünecker, Kinkeldey, Stockmair & Schwanhäusser Anwaltssozietät

(56) References cited:
- EP-A- 1 273 837
- US-A- 2 888 039

## Description

This invention relates to a four-way switching valve according to the preamble of claim 1 or 5, particularly for switching refrigerant lines between cooling and heating operation modes, e.g. in a heat pump-type heating and cooling system for an automotive vehicle.

In an automotive vehicle, a refrigeration cycle is employed for the cooling operation. For heating engine coolant is used as a heat source. Recently efficiency improved combustion engines do not provide sufficient coolant heating capacity in winter. For this reason, a heat pump system is used for both cooling and heating. In such systems, it is necessary to reverse the flow direction of the refrigerant flowing through indoor and outdoor heat exchangers, as the system is switched between cooling and heating. This is done by a four-way switching valve.

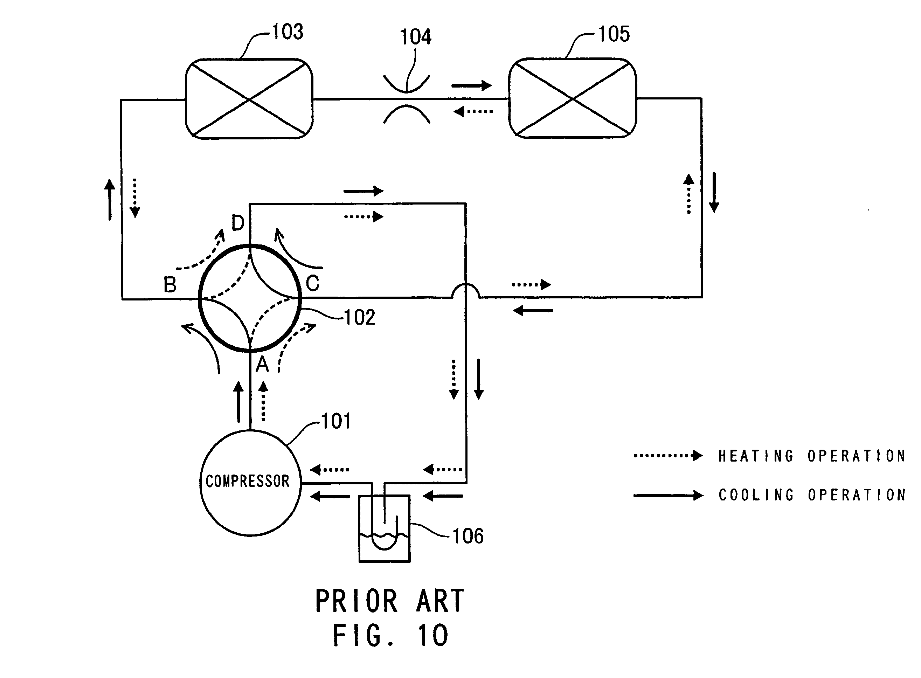

Fig. 10 is a block diagram of a heating and cooling system using a four-way switching valve 102 as proposed in JP-2003-083458 A (published 19.03.03). The heating and cooling system comprises a compressor 101, the four-way switching valve 102, an outdoor heat exchanger 103, a pressure-reducing device 104, an indoor heat exchanger 105, and an accumulator 106. The four-way switching valve 102 has four ports A to D. The port A is connected to the compressor 101, the port B is connected to the outdoor heat exchanger 103, the port C is connected to the indoor heat exchanger 105, and the port D is connected to the accumulator 106.

During cooling operation, the four-way switching valve 102 connects ports A and B and ports C and D, as indicated by solid lines. Therefore, high-temperature and high-pressure refrigerant compressed by the compressor 101 flows into port A and is sent from port B to the outdoor heat exchanger 103, where the refrigerant is caused to undergo heat exchange and condensation, and then is adiabatically expanded to a low-temperature and low-pressure refrigerant by the pressure-reducing device 104. The indoor heat exchanger 105 causes the low-temperature and low-pressure refrigerant to exchange heat with warm air in the compartment and to evaporate. Then, the refrigerant flows from port C to port D and to the accumulator 106, where the refrigerant is separated into gas and liquid, followed by returning to the compressor 101.

During the heating operation, the four-way switching valve 102 connects ports A and C and ports B and D as indicated by broken lines. Then, the high-temperature and high-pressure refrigerant compressed by the compressor 101 flows from port A via port C, to the indoor heat exchanger 105, where it exchanges heat with cool air in the compartment to heat the same. The refrigerant condensed by the indoor heat exchanger 105 is adiabatically expanded to low-temperature and low-pressure refrigerant by the pressure-reducing device 104. Then, the refrigerant undergoes heat exchange at the outdoor heat exchanger 103 to evaporate, and flows from the port B to port D into the accumulator 106, where the refrigerant is separated into gas and liquid.

This four-way switching valve 102 comprises a first plug switching the communication of port B (to outdoor heat exchanger 103) either to port A to which high-pressure refrigerant is introduced or to port D from which low-pressure refrigerant is sent out, a second plug switching the communication of port C (to the indoor heat exchanger 105) either to port A or D, first and second pistons for actuating these first and second plugs to perform switching operation, and a three-way solenoid valve for switching pressure in pressure control chambers for the first and second pistons between high pressure and low pressure.

The three-way solenoid valve switches the communication of the pressure control chambers of the first or second pistons such that they alternatingly communicate with port A (high-pressure fluid) or port D (low-pressure fluid), thereby switching between a first state in which ports A and B, and ports B and C are connected, and a second state in which ports A and C, and ports B and D are connected, respectively.

The three-way solenoid valve of the four-way switching valve of JP 2003-083458 A has balls forming valve elements secured to both axial end faces of a plunger which reciprocatingly moves within a guiding sleeve. Valve seats are formed on a core side and a casing side opposed to the balls. The sleeve for the plunger is brazed to the casing to ensure gastightness. This brazed connection sometimes may result in non-concentricity or a lateral offset between the ball of the plunger and the valve seat in the casing. Such misalignment results in an insufficient sealing function of the respective closed valve.

One possible method to avoid this problem is to provide a significant clearance between the sleeve and the plunger, such that when the ball is seated eccentrically on an opening edge of a valve hole of the valve seat, self-centering is effected until the ball contacts the entire opening edge of the valve hole. However, when a switching operation is performed by energization of the coil, the plunger is sometimes seated on the valve seat on the core side, in a state attracted to the sleeve, which may even increase the amount of eccentricity. Then, the ball by accident can force an indentation in the opening edge of the valve hole. The indentation results in a permanently deteriorating sealing at the valve portion whenever the valve is closed.

A pilot operated four-way valve disclosed in US 2,888,039 A is adapted for use in heat pump or refrigerating cycles and comprises two axially reciprocating valve element actuating shafts. One shaft carries a double valve element altematingly co-operating with one of two opposed sealing rings equipped inner valve seats arranged in a body chamber. The other shaft carries two axially spaced apart valve elements altematingly co-operating with one of two opposed sealing rings equipped outer valve seats arranged in another body chamber. Both shafts are axially guided at both shaft ends in guiding structures of the body.

It is an object of the present invention to provide a four-way solenoid valve having a three-way solenoid valve of which non-concentricity or eccentricity between a valve element and a valve hole is minimized or avoided.

The above problem is solved by a four-way switching valve according to claim 1.

In this four-way switching valve, the valve element of three-way solenoid valve is divided in two separate valve elements. The respective valve seats associated to the valve elements are each formed by a single component having a guide for guiding the valve element and a valve hole concentric with the guide. During seating the valve element will remain guided by the guide. This prevents each valve element and the valve hole associated therewith from becoming non-concentric or eccentric while the valve element is seated. No defective sealing function can occur.

The valve element actuated by the plunger is divided in two separate valve elements. A valve seat associated with each valve element and a guide for guiding the respective valve element during seating are formed integrally with each other, i.e. as a single on piece component. This allows to form the valve hole and the guide at least substantially concentric with each other by a respective single component. The valve element is seated while being guided in a state in which the concentricity of the valve element and the valve seat is maintained, thereby ensuring proper sealing properties in the valve portion when the valve is closed. In a configuration in which a spring is arranged between the two separate valve element, the valve closed state effected by seating of the valve is maintained by the urging force of the spring. This allows to absorb a valve element seating action shock and improves the durability of the valve.

Embodiments of the invention will be described with reference to the drawings, for the exemplary case of applying the invention to a heat pump-type heating and cooling system for an automotive vehicle. In the drawings is:
- Fig. 1: a longitudinal section of a first embodiment of a four-way switching valve, (switching position: solenoid OFF),
- Fig. 2: a longitudinal cross-section of details in Fig 1,
- Fig. 3: an enlarged longitudinal cross-section of a plug integrally formed with the solenoid valve,
- Fig. 4: a longitudinal section of the first embodiment, (switching position: solenoid ON),
- Fig. 5: a longitudinal section of a second embodiment of the four-way switching valve, (switching position: solenoid OFF),
- Fig. 6: a longitudinal section of a third embodiment of the four-way switching valve (switching position: solenoid OFF),
- Fig. 7: a longitudinal section of the third embodiment (switching position: solenoid ON),
- Fig. 8: a longitudinal section of a fourth embodiment of the four-way switching valve (switching position: solenoid OFF),
- Fig. 9: a longitudinal section of the fourth embodiment (switching position: solenoid ON), and
- Fig. 10: a diagram of a heating and cooling system.

To implement the four-way switching valve, in the heat pump-type heating and cooling system e.g. of Fig. 10, a port A formed in a body 1 is connected to piping for high-pressure refrigerant from compressor 101, a port B is connected to piping to the external heat exchanger 103, a port C is connected to piping to the internal heat exchanger 105, and a port D is connected to low-pressure refrigerant piping to the suction side of the compressor 102.

The four-way switching valve has a body 1 with two machined cylinders, receiving a plug 2 and a piston 3, and a plug 4 and a piston 5, respectively, in parallel with each other. The cylinders are closed by a plug 6 and a cap 7, respectively, to define pressure control chambers 8 and 9, between the plug 6 and the piston 3, and between the cap 7 and the piston 5, respectively. The pistons 3 and 5 are integrally formed with axially extending shafts whose ends are in abutment with upper surfaces of the plugs 2 and 4, respectively. The plugs 2 and 4 are urged upward by springs 10 and 11.

The plugs 2 and 4 have portions serving as valve elements on both axial ends. Annular flanges integrally formed with the body 1 in respective intermediate portions of passages communicating the port A with the ports C, B, form valve seats 2a, 4a on which the plugs 2 and 4 are seated when the plugs 2 and 4 move downwardly. Further, plugs 12, 13 fitted in respective intermediate portions of passages communicating the ports C, B with the port D, form valve seats 12a, 13a on which the plugs 2 and 4 are seated when the plugs 2 and 4 move upwardly. The plugs 2, 4 carry seal rings 14, 15 via which they are seated on the valve seats.

The interior structure of the body 1 of the four-way switching valve defines a combination of a three-way switching valve to connect port B either with port A or port D, and a three-way switching valve to connect port C either with port A or port D.

A space b communicating with port B is connected to the pressure control chamber 9 via a tube 16. A three-way solenoid valve 18 is located at the upper end of the body 1 and serves to connect selectively the pressure control chamber 8 either with a space a communicating with port A into which high-pressure refrigerant is introduced or with a space d communicating via a tube 17 with port D from which low-pressure refrigerant exits.

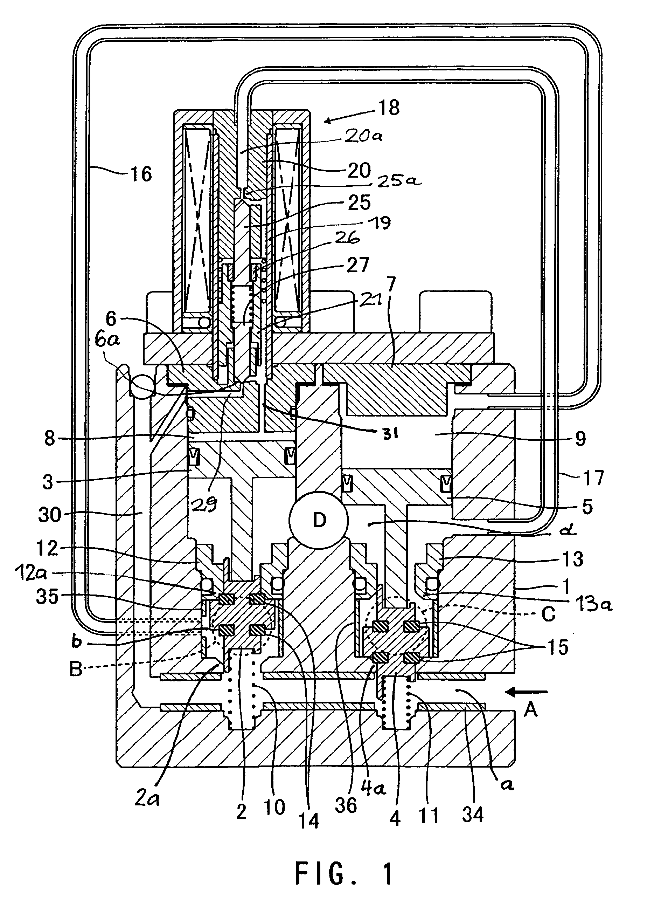

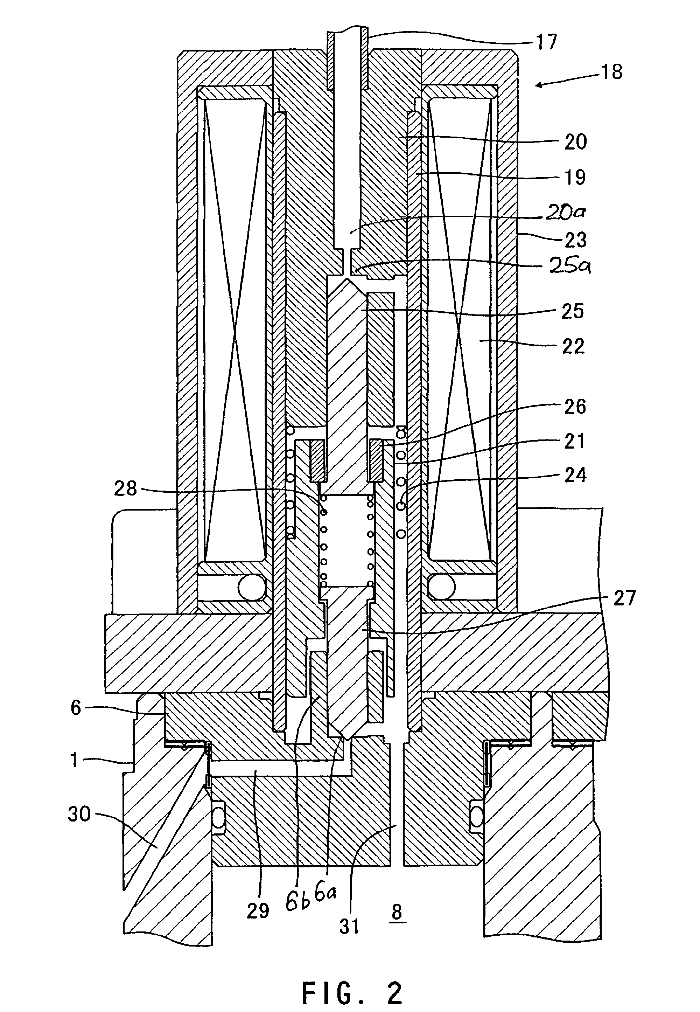

The three-way solenoid valve 18 includes in Figs 1 and 2, a core 20 fixed in the upper end of a sleeve 19, a reciprocating plunger 21 in the sleeve 19, a coil 22 arranged outside the sleeve 19, a yoke 23 arranged outside the coil 22, and a spring 24 between the core 20 and the plunger 21. The core 20 is formed with above-mentioned axial refrigerant passage 20a, and an annular flange forming a valve seat 25a. The refrigerant passage upper end is connected via the tube 17 to the low-pressure chamber or space d communicating with the port D.

In the refrigerant passage 20a a needle 25 forming a valve element is movably arranged opposed to the annular flange or valve seat 25a from below. The core 20 and the lower portion of the passage 20a guide the needle 25 during the reciprocating needle motion. The guide is integrally formed with the annular flange forming the valve seat 25a, i.e. in one unitary component, whereby the needle 25 is maintained substantially concentric with respect to the valve hole formed in the center of the flange or valve seat 25a. A lower end of the needle 25 is inserted into an axial hole of the plunger 21. When the valve 25, 25a is opened, the needle 25 is latched by a stopper 26 fitted in an upper end opening of the hole of the plunger 21 and caused to move downward.

Further, a needle 27 is axially movably arranged in the axial hole of the plunger 21. The needle 27 is held by an inner annular flange integrally formed with the plunger 21, such that the needle 27 is prevented from moving out of the hole. The needles 25 and 27 are commonly loaded by a spring 28 in respective axially opposite outward directions.

The needle 27 has a lower end thereof arranged opposed to a valve seat 6a formed on the plug 6. The plug 6 is formed with an upper hollow cylindrical projection 6b for guiding the needle 27, and has a valve hole formed coaxially with the projection 6b. This valve hole in valve seat 6a communicates with a passage 29 extending to the periphery of the plug 6, and with the high-pressure passage 30 in the body 1. The lower end of the sleeve 19 is connected, e.g. welded, to the plug 6. An axial passage 31 communicating with the pressure control chamber 8 is formed through the plug 6.

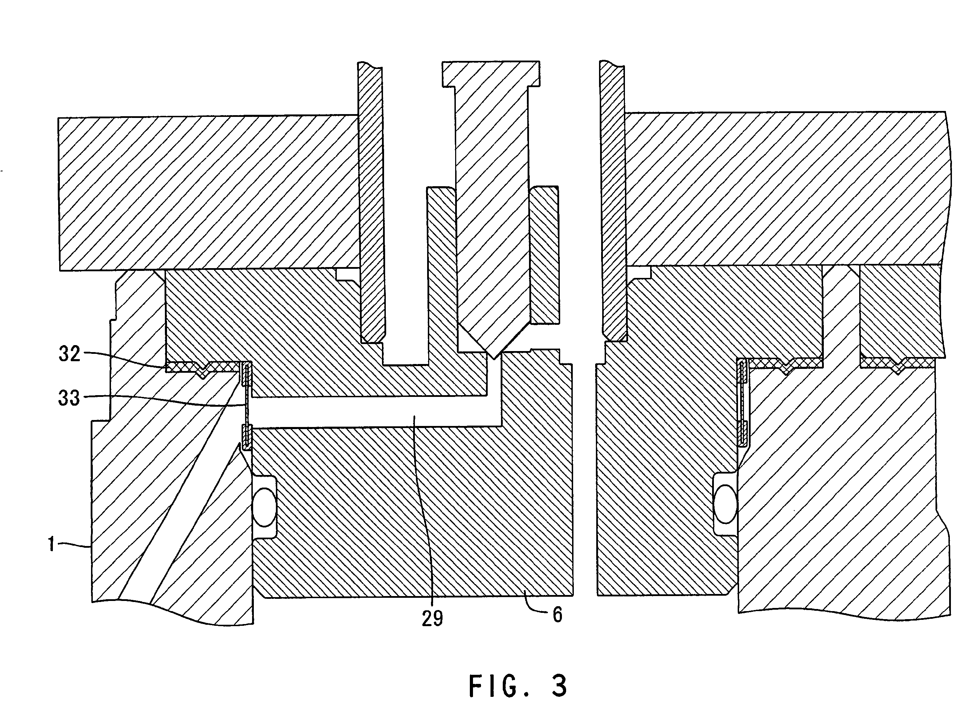

The plug 6 (Fig. 3), is fitted via a gasket 32 in an upper end opening of the cylinder in the body 1. An opening at an end of the passage 29 communicating with the valve hole in valve seat 6a is provided with a hollow cylindrical strainer 33, for withholding foreign matters contained in the refrigerant.

A heat-insulating sleeve 34 is provided inside the passage a into which the high-temperature high-pressure refrigerant is introduced from A (Fig. 1), and heat-insulating sleeves 35,36 are provided inside the cylinders where the plugs 2, 4 are arranged. They suppress heat conduction via the body 1 to the space d communicating with the low-temperature low-pressure port D.

When the solenoid is OFF (Fig. 1), the plunger 21 is urged downwardly by the spring 24. The upper needle 25 is pulled downward by the stopper 26 fitted in the plunger 21, while the lower needle 27 is urged downward by the spring 28 to be seated on the valve seat 6a. Pressure control chamber 8 communicates with the low-pressure port D via the passage 31 formed through the plug 6, respective grooves longitudinally formed on the outer peripheries of the plunger 21 and the core 20, a passage extending from a peripheral surface of the core 20 to a space on the needle 25 side of the annular flange forming the valve seat 5a, the valve hole in the valve seat 25a projection, the refrigerant passage 20a in the core 20, and the tube 17. The lower needle 27 blocks the passage 29 communicated with the space a of the high-pressure port A.

The pressure within the pressure control chamber 8 is reduced toward low-pressure port D, via the three-way solenoid valve 18. The port A still receives high-pressure refrigerant. The plug 2 and the piston 3 are pushed upward. The plug 2 is seated on the valve seat 12a of the plug 12 and at the same time moved away from valve seat 2a of the annular flange of the body 1. While this increases the pressure in the space in which the plug 2 is arranged, the pressure in the pressure control chamber 9 is also increased to a value corresponding to the value of the pressure in the space due to high pressure supplied via the tube 16. This causes the piston 5 which has a larger pressure-receiving area than the plug 4 to be pushed and moved downwardly. The plug 4 is seated on the valve seat 4a of the annular flange of the body 1 and at the same time moves away from the valve seat 13a of the plug 13. Port A communicates with port B, and port C communicates with port D. The heating and cooling system is in a cooling operation mode. The high-pressure refrigerant from the compressor and received at port A flows from port B to the external heat exchanger, and refrigerant from the internal heat exchanger received at port C flows from port D to the compressor.

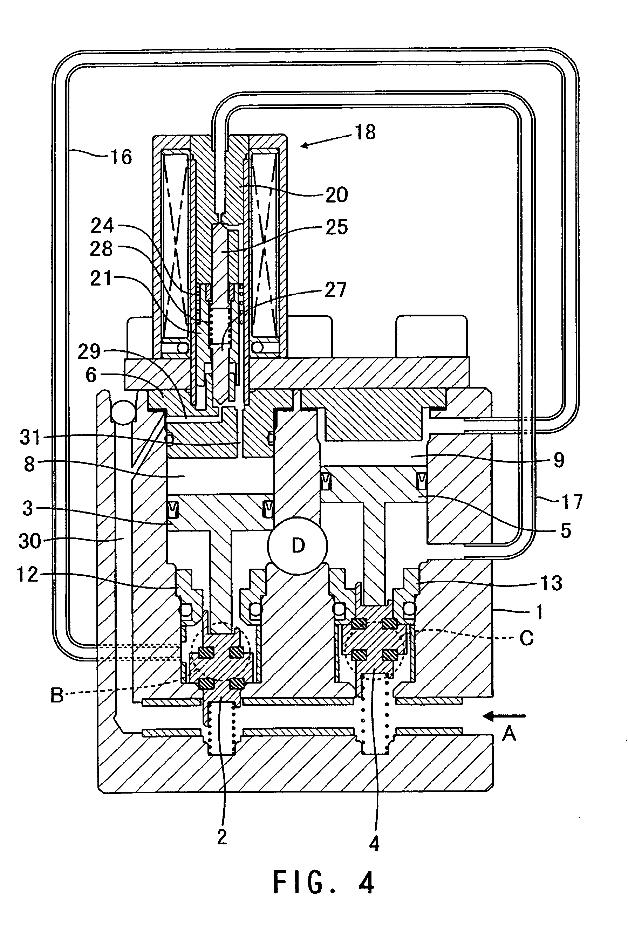

With the solenoid ON (Fig. 4), the plunger 21 is attracted to the core 20 against the force of the spring 24. The upper needle 25 is pushed upwardly by the spring 28 and is seated on the valve seat 25a in the core 20. The flange at the upper end of the lower needle 27 is latched by the annular flange in the plunger 21. The lower needle 27 is lifted. The three-way solenoid valve 18 blocks the tube 17 communicating with the low-pressure space, and connects the pressure control chamber 8 with the space a of the high-pressure port A via the passage 31 of the plug 6, a passage extending laterally through a peripheral wall of the hollow cylindrical projection 6b to a space formed on the needle 27 side of the valve seat 6a, the valve hole, the passage 29, and the high-pressure passage 30.

By the high-pressure refrigerant in pressure control chamber 8, the piston 3 is moved downwardly. At the same time, the plug 2 is moved downwardly into the valve hole of the valve seat 2a communicating with the passage a for the high-pressure refrigerant. The pressure in the space where the plug 2 is arranged is reduced. Simultaneously, the pressure in the pressure control chamber 9 is reduced via the tube 16. The plug 4 and the piston 5 move upwardly, by the high-pressure refrigerant introduced from the port A. In due time, the plug 2 is seated on the associated valve seat 12a of the annular flange in the body 1, and at the same time moves away from the valve seat 12a of the plug 12, while the plug 4 moves away from the associated valve seat 4a of the annular flange in the body 1 and is seated on the valve seat 13a of the plug 13. Port A communicates with port C, and port B communicate with port D. The heating and cooling system is switched to the heating operation mode. The high-pressure refrigerant from the compressor and received at port A flows from port C to the internal heat exchanger, and refrigerant from the external heat exchanger and received at port B flows from port D to the compressor.

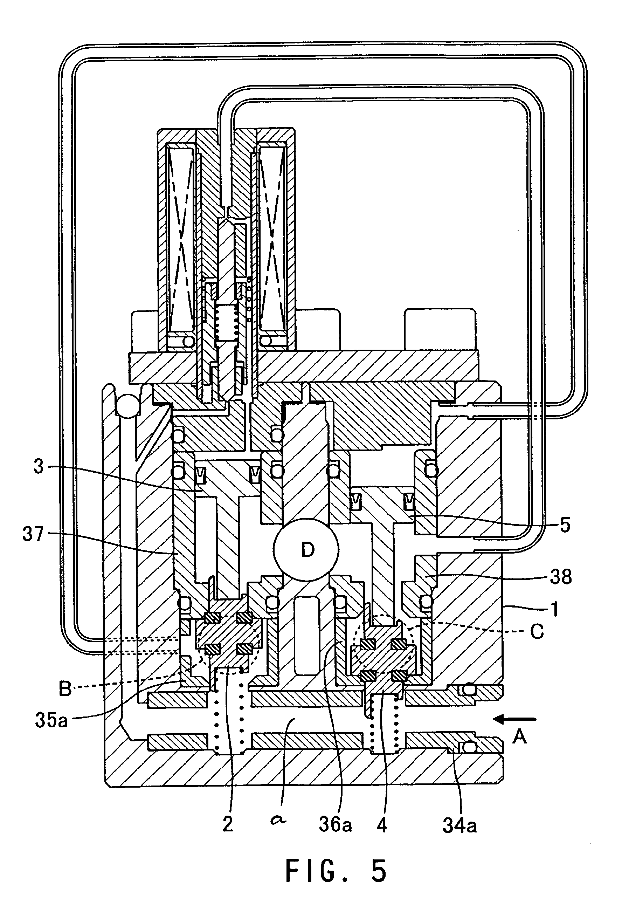

The four-way switching valve (second embodiment in Fig. 5) is distinguished from the first embodiment in further enhanced heat insulating effects. A, e.g. thick walled heat-insulating sleeve 34a made of a material with low thermal conductivity, e.g. of resin, is arranged inside the passage a for the high-temperature high-pressure refrigerant from port A. For example, thick walled heat-insulating sleeves 35a, 36a made of resin are arranged in the cylinders where the plugs 2, 4 are arranged. Further heat-insulating sleeves 37, 38, made of resin, are arranged inside the cylinders where the pistons 3, 5 are arranged. These heat-insulating sleeves 37, 38 integrate the functions of the plugs 12, 13 of the first embodiment.

These measures insulate the inside of the passage a for the high-temperature high-pressure refrigerant from the port A and the two cylinders, from the body 1, and suppress transfer of heat of the refrigerant introduced from port A to the low-temperature refrigerant flowing through port D. This reduces heat loss within the four-way switching valve

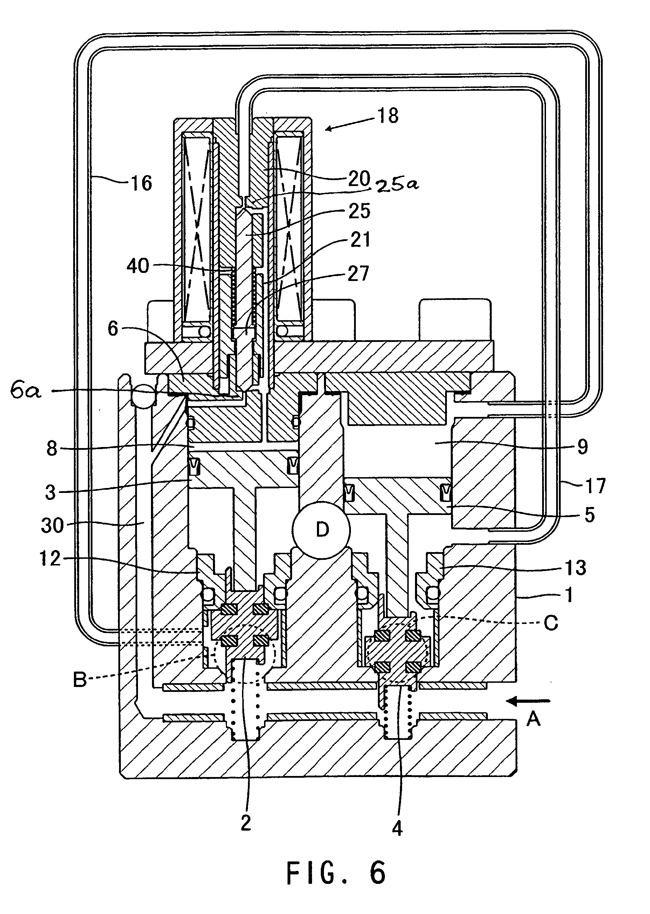

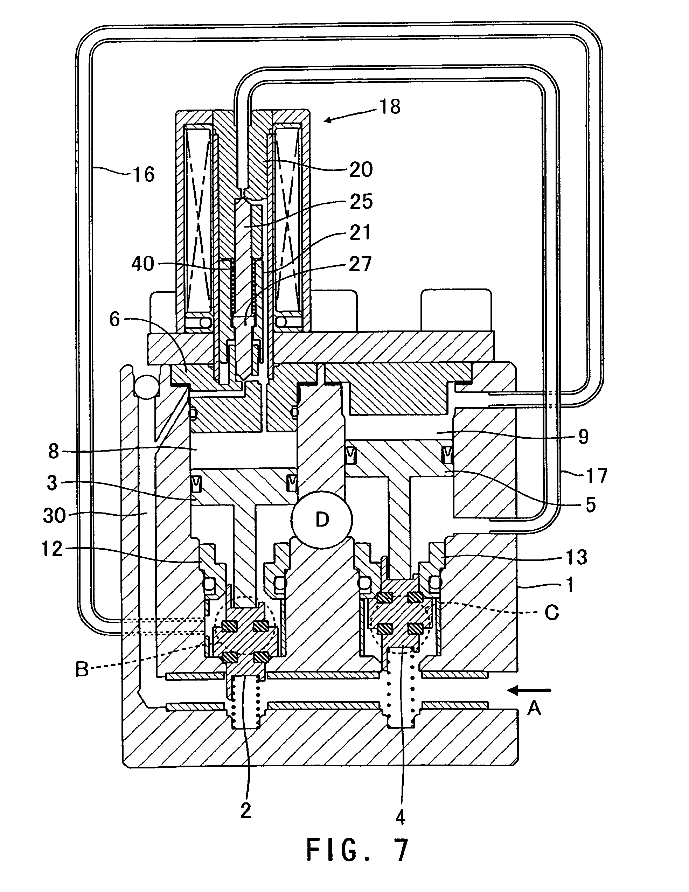

The third embodiment of Figs 6, 7 is distinguished from the first embodiment by the modified three-way solenoid valve 18. The three-way solenoid valve 18 actuates the needles 25, 27 as two separate members and the plunger 21 by a single spring 40.

The needles 25, 27 are arranged with their respective opposed end faces in contact with each other. The spring 40 is arranged between the flange of the needle 25 and the core 20 and urges the upper needle 25 away from the associated valve seat 25a. The upper needle 25 urges the lower needle 27 in a direction of seating the needle 27 on the associated valve seat 6a. The lower needle 27, also urges the plunger 21 latched by its flange in a direction away from the core 20. This allows to integrate the two springs 24, 28 of the first embodiment into the single spring 40, and dispenses with the stopper 26 for pulling the upper needle 25 downward, whereby the costs can be reduced.

The valve element is formed by the two separate parts, i.e. by the needles 25, 27. The valve seats 6a, 25a and valve holes respectively associated with the needles 25, 27, and the members guiding the needles 25, 27 toward and away from the valve seats are formed by respective single components (core 20, plug 6), whereby the needles 25, 27 and their valve seats can be arranged substantially on the same axis.

When the solenoid is OFF (Fig. 6), the plunger 21 is urged downwardly by the spring 40. The upper needle 25 is moved away from the valve seat 25a. The lower needle 27 is seated on the valve seat 6a. The pressure control chamber 8 communicates with the low-pressure port D via the tube 17, and is disconnected from the high-pressure port A.

The plug 2 is pushed upwardly by the high-pressure refrigerant introduced in port A, and is seated on the plug 12 to establish communication between the ports A and B, and to block the communication between the ports B and D. High-pressure refrigerant is introduced into the pressure control chamber 9 via the tube 16. The piston 5 pushes the plug 4 downwardly on the valve seat in the body 1 to establish communication between the ports C and D, and to block communication between the ports C and A. The heating and cooling system is in the cooling operation mode.

When the solenoid is ON (Fig. 7), the plunger 21 is attracted to the core 20 against the urging force of the spring 40. The upper needle 25 blocks the passage to the tube 17, while the lower needle 27 opens the passage to introduce high-pressure refrigerant into the pressure control chamber 8. The piston 3 pushes the plug 2 downward on the valve seat in the valve body 1 to block the communication between the ports A and B and to establish communication between the ports B and D. The pressure in the pressure control chamber 9 is reduced via the tube 16, so that the high-pressure refrigerant introduced from port A moves the plug 4 upward on the plug 13, to establish communication between the ports C and A, and to block communication between the ports C and D. The heating and cooling system is switched to the heating operation mode.

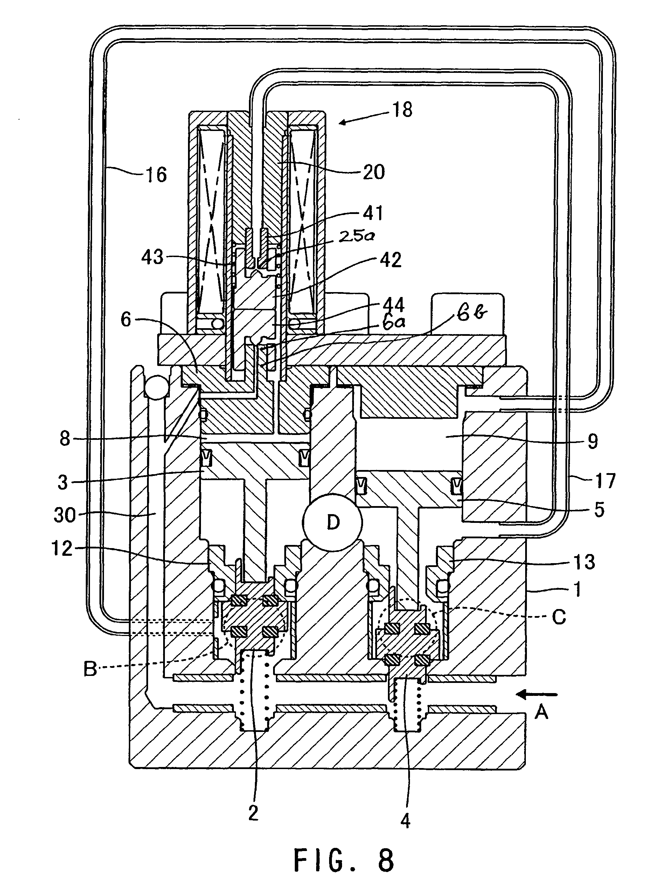

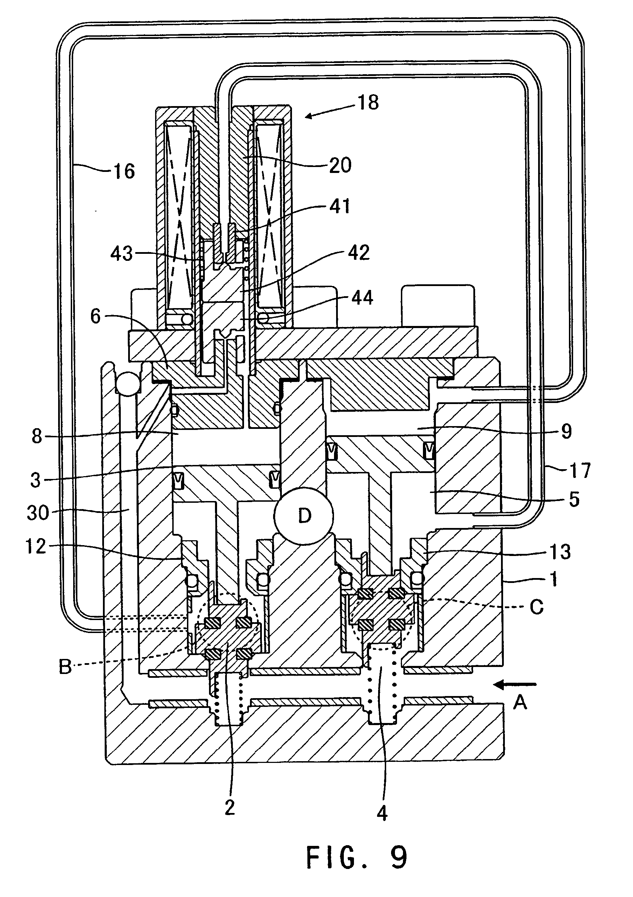

The fourth embodiment (Figs 8, 9) is distinguished from the first embodiment in that the plunger 21 is divided into two separate portions which are caused to fulfil the functions of the needles 25, 27, respectively. The portions are urged by a single spring 43. A guide having a valve seat and a valve hole here is held from the inside, instead of being held from the outside. More specifically, a hollow plug 41 serving as the guide and the valve seat is fitted in an lower end opening of the refrigerant passage of the core 20. This plug 41 is made from a non-magnetic material, thereby preventing attraction characteristics of the core 20 from being changed due to a change in the shape thereof. Arranged below the core 20 is an axially movable plunger 42 guided by plug 41. The plunger 42 has a conical projection forming a central valve element opposed to a valve seated at a lower end face of the plug 41. Spring 43 urges the plunger 42 away from the plug 41. Arranged below the plunger 42 is an axially movable plunger 44 guided on the periphery of a hollow cylindrical projection on the plug 6. The hollow cylindrical projection of the plug 6 forms an upper valve seat for a conical projection integrally formed with the plunger 44. The projection defines the valve element opposed to the valve seat.

When the solenoid is OFF (Fig. 8), the plungers 42, 44 are urged downward by spring 43, while being guided by the plug 41 and the hollow cylindrical projection of the plug 6, respectively. The conical projection on the upper plunger 42 moves away from the valve seat of the plug 41, while the lower plunger 44 is seated on the valve seat of plug 6. The pressure control chamber 8 communicates with the low-pressure port D via the tube 17, and is disconnected from the high-pressure port A.

The plug 2 now is pushed upwardly by the high-pressure refrigerant introduced into the port A, and seats on the plug 12 to establish communication between ports A and B, and to block communication between ports B and D. The high-pressure refrigerant enters the pressure control chamber 9 via the tube 16. The piston 5 pushes the plug 4 downward on the valve seat formed in the body 1 to connect ports C and D, and to block communication between ports C and A. Thus, the heating and cooling system is in the cooling operation mode.

When the solenoid is ON (Fig. 9), the plungers 42, 44 are attracted to the core 20 against the force of the spring 43. The upper plunger 42 is seated on the plug 41 and blocks the passage to the tube 17. The lower plunger 44 clears the valve seat and establishes communication with the high-pressure passage 30 to introduce the high-pressure refrigerant into the pressure control chamber 8.

Now, the piston 3 pushes the plug 2 downwardly on the valve seat formed in the valve body 1 to block the communication between ports A and B and to establish communication between ports B and D. Further, the pressure in the pressure control chamber 9 is reduced via the tube 16. The high-pressure refrigerant introduced from the port A pushes the plug 4 upwardly on the plug 13, to establish communication between ports C and A, and to block communication between ports C and D. Thus, the heating and cooling system is switched to the heating operation mode.

Instead of tube 16 a refrigerant passage may be formed in a portion of the body 1 deviating ports A to D and the cylinders, for connecting the space where the plug 2 is arranged and the pressure control chamber 9.

## Claims

1. A four-way switching valve including first and second axially reciprocable plugs (2, 4) arranged in first and second parallel cylinders formed in a body (1), the first and second plugs having valve elements at both axial ends for switching of fluid passages, first and second pistons (3, 5) for actuating the first and second plugs, respectively, and a three-way solenoid valve (18) selectively connecting a pressure control chamber (8) of the first piston (3) either with a space (a) into which high-pressure fluid is introduced or a space (d) into which low-pressure fluid is introduced, **characterized in that**:
the three-way solenoid valve (18) comprises:
a first valve element and a second valve element arranged in an axial direction of a plunger as respective two separate parts, each for reciprocating motion;
a first valve seat (25a) having a guide for guiding said first valve element and a valve hole concentric with the guide both arranged at respective axial positions of the plunger; and
a second valve seat (6a) having a guide for guiding the second valve element and a valve hole concentric with the guide both arranged at respective axial positions of the plunger.

2. The four-way switching valve according to claim 1, **characterized in that** the first and second valve elements are formed as needles (25, 27), that the first valve seat (25a) is integrally formed with a core (20), and that the second valve seat (6a) is integrally formed with a closing plug (6) in the first cylinder defining a boundary of the pressure control chamber (8) of the first piston (3).

3. The four-way switching valve according to claim 2, **characterized in that** the first and second valve elements have opposed ends thereof within the plunger (21) in a state in which axial motion thereof is restricted such that when one of the first and second valve elements is in a closed state, the other is in a an open state, and that the first and second valve elements are urged by spring force in respective axially outward directions.

4. The four-way switching valve according to claim 2, **characterized in that** the first and second valve elements have opposed ends thereof being positioned within the plunger (21) in a state in which axial motion thereof is restricted such that when the first valve element is in a closed state, the second valve element is in an open state, and at the same time, the valve elements are urged in a direction to the closed state of the second valve element by the force of a spring (24) also urging the plunger (21) in a direction away from the core (20).

5. A four-way switching valve including first and second axially reciprocable plugs (2, 4) arranged in first and second parallel cylinders formed in a body (1), the first and second plugs having valve elements at both axial ends for switching of fluid passages, first and second pistons (3, 5) for actuating the first and second plugs, respectively, and a three-way solenoid valve (18) selectively connecting a pressure control chamber (8) of the first piston (3) either with a space (a) into which high-pressure fluid is introduced or a space (d) into which low-pressure fluid is introduced, **characterized in that** the first and second valve elements are separated by first and second plungers (42, 44), that the first valve seat (25a) is formed by a guide plug (41) fitted in a fluid passage formed at an axial position of a core (20) such that the guide plug (41) guides the first plunger (42) and has a valve hole at an axial position thereof, and that the second valve seat (6a) is formed by a hollow cylindrical projection integrally formed with a closing plug (6) in the first cylinder as a boundary of a pressure control chamber (8) of the first piston (3), such that the hollow cylindrical projection protrudes in a manner guiding the second plunger (44), and has a valve hole at an axial position thereof.

6. The four-way switching valve according to claim 2 or 5, **characterized in that** the closing plug (6) carries a peripheral strainer (33) in a flow path to the valve hole of the second valve seat (6a).

7. The four-way switching valve according to claim 1, **characterized in that** heat-insulating members (34, 35, 36, 34a, 35a, 36a, 37, 38) are arranged inside the fluid passages controlled by the first and second plugs (2, 4).

## Patentansprüche

1. Vierwege-Schaltventil mit ersten und zweiten axial hin- und herbeweglichen stopfenartigen Kolben (2, 4), die in ersten und zweiten parallelen Zylinderbohrungen in einem Ventilkörper (1) angeordnet sind, wobei die ersten und zweiten stopfenartigen Kolben an beiden axialen Enden zum Umschalten von Fluidpassagen Ventilelemente aufweisen, ersten und zweiten Kolben (3, 5) jeweils zum Betätigen der ersten und zweiten stopfenartigen Kolben, und einem Dreiwege-Magnetventil (18) zum wahlweisen Verbinden einer Drucksteuerkammer (8) des ersten Kolbens (3) entweder mit einem Raum (a), in welchen Hochdruckfluid eingeführt wird, oder einem Raum (d), in welchen Niederdruckfluid eingeführt wird, **dadurch gekennzeichnet, dass** das Dreiwege-Magnetventil (18) aufweist:
ein erstes Ventilelement und ein zweites Ventilelement, die in einer axialen Richtung eines Plungers als jeweils zwei separate Teile angeordnet sind, jedes für eine hin- und hergehende Bewegung;
einen ersten Ventilsitz (25a) mit einer Führung zum Führen des ersten Ventilelementes und mit einer Ventilbohrung, die konzentrisch ist mit der Führung, wobei beide an jeweiligen axialen Positionen des Plungers angeordnet sind; und
einen zweiten Ventilsitz (6a) mit einer Führung zum Führen des zweiten Ventilelementes und mit einer Ventilbohrung, die zu der Führung konzentrisch ist, wobei beide an jeweiligen axialen Positionen des Plungers angeordnet sind.

2. Vierwege-Schaltventil nach Anspruch 1, **dadurch gekennzeichnet, dass** die ersten und zweiten Ventilelemente als Nadeln (25, 27) ausgebildet sind, dass der erste Ventilsitz (25a) mit einem Kern (20) integral ausgebildet ist, und dass der zweite Ventilsitz (6a) mit einem Verschließstopfen (6) in der ersten Zylinderbohrung integral ausgebildet ist, der eine Begrenzung der Drucksteuerkammer (8) des ersten Kolbens (3) definiert.

3. Vierwege-Schaltventil nach Anspruch 2, **dadurch gekennzeichnet, dass** die ersten und zweiten Ventilelemente gegenüberliegende Enden aufweisen innerhalb des Plungers (21) in einem Status, in welchem ihre axiale Bewegung derart beschränkt ist, dass dann, wenn eines der ersten und zweiten Ventilelemente in einem geschlossenen Status ist, das andere in einem offenen Status ist, und dass die ersten und zweiten Ventilelemente durch Federkraft jeweils in Richtungen axial nach außen beaufschlagt werden.

4. Vierwege-Schaltventil nach Anspruch 2, **dadurch gekennzeichnet, dass** die ersten und zweiten Ventilelemente gegenüberliegende Enden aufweisen, die innerhalb des Plungers (21) in einem Status positioniert sind, in welchem eine axiale Bewegung davon beschränkt wird derart, dass, sobald das erste Ventilelement in einem geschlossenen Status ist, das zweite Ventilelement in einem offenen Status ist, und dass zur selben Zeit, die Ventilelemente in einer Richtung zum geschlossenen Status des zweiten Ventilelementes durch die Kraft einer Feder (24) beaufschlagt sind, die auch den Plunger (21) in einer Richtung von dem Kern (20) weg beaufschlagt.

5. Vierwege-Schaltventil mit ersten und zweiten, axial hin- und herbeweglichen stopfenartigen Kolben (2, 4), die in ersten und zweiten, parallelen Zylinderbohrungen angeordnet sind, welche in einem Ventilkörper (1) ausgebildet sind, wobei die ersten und zweiten stopfenartigen Kolben an beiden axialen Enden Ventilelemente zum Schalten von Fluidpassagen aufweisen, ersten und zweiten Kolben (3, 5) zum Betätigen jeweils der ersten und zweiten stopfenartigen Kolben, und einem Dreiwege-Magnetventil (18) zum wahlweisen Verbinden einer Drucksteuerkammer (8) des ersten Kolbens (3) entweder mit einem Raum (a), in welchen Hochdruckfluid eingeführt wird, oder einem Raum (d), in welchen Niederdruckfluid eingeführt wird, **dadurch gekennzeichnet, dass** die ersten und zweiten Ventilelemente durch erste und zweite Plunger (42, 44) separiert sind, dass der erste Ventilsitz (25a) durch einen Führungsstopfen (41) gebildet wird, der in eine Fluidpassage eingepasst ist, die an einer axialen Position eines Kerns (20) derart ausgebildet ist, dass der Führungsstopfen (41) den ersten Plunger (42) führt und an einer axialen Position davon eine Ventilbohrung aufweist, und dass der zweite Ventilsitz (6a) durch einen hohlen zylindrischen Vorsprung gebildet wird, der integral ist mit einem Verschließstopfen (6) in der ersten Zylinderbohrung als eine Begrenzung einer Drucksteuerkammer (8) des ersten Kolbens (3), derart, dass der hohle zylindrische Vorsprung auf eine Weise vorsteht, mit der er den zweiten Plunger (44) führt und an einer axialen Position davon eine Ventilbohrung besitzt.

6. Vierwege-Schaltventil nach Anspruch 2 oder 5, **dadurch gekennzeichnet, dass** der Verschließstopfen (6) ein peripheres Sieb (33) in einem Strömungsweg zu der Ventilbohrung des zweiten Ventilsitzes (6a) trägt.

7. Vierwege-Schaltventil nach Anspruch 1, **dadurch gekennzeichnet, dass** im Inneren der Fluidpassagen, die durch die ersten und zweiten stopfenartigen Kolben (2, 4) gesteuert werden, wärmeisolierende Glieder (34, 35, 36, 34a, 35a, 36a, 37, 38) angeordnet sind.

## Revendications

1. Soupape de commutation à quatre voies comprenant des premier et second obturateurs alternatifs (2, 4) agencés dans des premier et second cylindres parallèles formés dans un corps (1), les premier et second obturateurs ayant des éléments de soupape aux deux extrémités axiales pour commutation des passages du fluide, des premier et second pistons (3, 5) pour actionner les premier et second obturateurs, respectivement, et une électrovanne à trois voies (18) connectant sélectivement une chambre régulatrice de pression (8) du premier piston (3) soit avec un espace (a) dans lequel est introduit un fluide haute pression ou un espace (d) dans lequel est introduit un fluide basse pression,
**caractérisée en ce que** :
l'électrovanne à trois voies (18) comprend :
un premier élément de soupape et un second élément de soupape agencés dans une direction axiale d'un piston plongeur en tant que deux parties séparées respectives, chacun pour exercer le mouvement inverse ;
un premier siège de soupape (25a) ayant un guide pour guider ledit premier élément de soupape et un trou de jante pour la valve concentrique avec le guide agencés tous deux à des positions axiales respectives du piston plongeur ; et
un second siège de soupape (6a) ayant un guide pour guider ledit second élément de soupape et un trou de jante pour la valve concentrique avec le guide agencés tous deux à des positions axiales respectives du piston plongeur.

2. Soupape de commutation à quatre voies selon la revendication 1, **caractérisée en ce que** les premier et second éléments de soupape sont formés comme des aiguilles (25, 27), **en ce que** le premier siège de soupape (25a) est intégralement formé avec un mécanisme de valve (20) et **en ce que** le second siège de soupape (6a) est intégralement formé avec un obturateur de fermeture (6) dans le premier cylindre définissant une frontière de la chambre régulatrice de pression (8) du premier piston (3).

3. Soupape de commutation à quatre voies selon la revendication 2, **caractérisée en ce que** les premier et second éléments de soupape ont des extrémités opposées de celle-ci à l'intérieur du piston plongeur (21) dans un état dans lequel le mouvement axial de celui-ci est limité de sorte que lorsque l'un des premier et second éléments de soupape est dans un état fermé, l'autre est dans un état ouvert, et que les premier et second éléments de soupape sont poussés par la force du ressort dans les directions externes axiales respectives.

4. Soupape de commutation à quatre voies selon la revendication 2, **caractérisée en ce que** les premier et second éléments de soupape ont des extrémités opposées de celle-ci étant positionnés à l'intérieur du piston plongeur (21) dans un état dans lequel le mouvement axial de celui-ci est limité de sorte que lorsque le premier élément de soupape est dans un état fermé, le second élément de soupape est dans un état ouvert, et en même temps, les éléments de soupape sont poussés dans une direction vers l'état fermé du second élément de soupape par la force d'un ressort (24) poussant également le piston plongeur (21) dans une direction loin du mécanisme de valve (20).

5. Soupape de commutation à quatre voies comprenant des premier et second obturateurs axialement alternatifs (2, 4) agencés dans des premier et second cylindres parallèles formés dans un corps (1), les premier et second obturateurs ayant des éléments de soupape aux deux extrémités axiales pour commutation des passages de fluides, les premier et second pistons (3,5) pour actionner les premier et second obturateurs, respectivement, et une électrovanne à trois voies (18) connectant sélectivement une chambre régulatrice de pression (8) du premier piston (3) soit avec un espace (a) dans lequel est introduit un fluide haute pression ou un espace (d) dans lequel est introduit un fluide basse pression, **caractérisée en ce que** les premier et second éléments de soupape sont séparés par les premier et second pistons plongeurs (42,44) **en ce que** le premier siège de soupape (25a) est formé par un guide-pilote (41) installé dans un passage de fluide formé à une position axiale d'un mécanisme de valve (20) de sorte que le guide-pilote (41) guide le premier piston plongeur (42) et ait un trou de jante pour la valve à une position axiale de celui-ci, et que le second siège de soupape (6a) soit formé par une saillie cylindrique creuse intégralement formée avec un obturateur de fermeture (6) dans le premier cylindre en tant que frontière d'une chambre régulatrice de pression (8) du premier piston (3) de sorte que la saillie cylindrique creuse ressorte de façon à guider le second piston plongeur (44) et ait un trou de jante pour la valve à une position axiale de celui-ci.

6. Soupape de commutation à quatre voies selon la revendication 2 ou 5, **caractérisée en ce que** l'obturateur de fermeture (6) porte une crépine périphérique (33) dans une voie d'écoulement vers le trou de jante pour la valve du second siège de soupape (6a).

7. Soupape de commutation à quatre voies selon la revendication 1, **caractérisée en ce que** les éléments d'isolation thermique (34, 35, 36, 34a, 35a, 36a, 37, 38) sont agencés à l'intérieur des passages de fluide commandés par les premier et second obturateurs (2, 4).
